# EUROPÄISCHE PATENTANMELDUNG

(11) **EP 4 067 630 A1**
(43) Veröffentlichungstag der Anmeldung: **05.10.2022**
(21) Anmeldenummer: 21165886.9
(22) Anmeldetag: 30.03.2021
(51) Int. Cl.: F01K 13/02, F01K 23/10

(54) **VERFAHREN UND EINRICHTUNG ZUR RECHNERGESTÜTZTEN STEUERUNG UND/ODER REGELUNG DES BETRIEBS EINES ENERGIEERZEUGUNGSSYSTEMS, KOMBIKRAFTWERK**

(71) Anmelder: Siemens Energy Global GmbH & Co. KG, 81739 München (DE)
(72) Erfinder: Schöner, Holger, 81739 München (DE); Sterzing, Volkmar, 85579 Neubiberg (DE); Lehmann, Nico, 40233 Düsseldorf (DE); Ruch, Ambrosius, 91052 Erlangen (DE)

(57) **Zusammenfassung**

Die Erfindung betrifft ein Verfahren zur rechnergestützten Steuerung und/oder Regelung des Betriebs eines Energieerzeugungssystems mit den Schritten: Erstellen eines Simulationsmodells des Energieerzeugungssystems; Bereitstellen eines Effizienzberechnungsmoduls, welches dazu ausgebildet ist, anhand des erstellten Simulationsmodells und unter Verwendung von vorgegebenen Betriebsparametern die zu erwartende thermische und elektrische Effizienz des Energieerzeugungssystems zu berechnen; Anwenden eines Lern- und/oder Optimierungsverfahrens auf das bereitgestellte Effizienzberechnungsmodul unter Verwendung von vorher gewonnenen bekannten Betriebsdaten des Energieerzeugungssystems und/oder anhand von durch das Simulationsmodell gewonnenen Simulationsdaten derart, dass der Betrieb des Energieerzeugungssystems hinsichtlich zumindest eines thermischen und/oder elektrischen Betriebsparameters entsprechend einer Zielvorgabe optimiert wird; Erstellen einer Steuerungsstrategie für das Energieerzeugungssystem auf der Basis des trainierten Effizienzberechnungsmoduls; und Betreiben des Energieerzeugungssystems unter Verwendung der erstellen Steuerungsstrategie. Die Erfindung betrifft ferner eine Einrichtung zur rechnergestützten Steuerung und/oder Regelung des Betriebs eines Energieerzeugungssystems sowie ein Kombikraftwerk.

## Beschreibung

Die vorliegende Erfindung betrifft ein Verfahren und eine Einrichtung zur rechnergestützten Steuerung und/oder Regelung des Betriebs eines Energieerzeugungssystems sowie ein Kombikraftwerk.

Unter einem Kombikraftwerk versteht man allgemein ein Kraftwerk oder ein virtuelles Kraftwerk, das verschiedene Prozesse von Energiequellen miteinander kombiniert, beispielsweise eine Kombination eines Joule-Kreisprozesses oder Brayton-Kreisprozesses mit einem Clausius-Rankine-Kreisprozess im Gas- und Dampfturbinenkraftwerk. Beispiele solcher Kombikraftwerke sind das allgemein bekannte Gas-und-DampfturbinenKraftwerk (GuD) oder ein Kraftwerk mit Kraft-Wärme-Kopplung, bei denen neben der Erzeugung von Elektrizität auch eine Restenergie, welche aus dem Prozess der Stromerzeugung resultiert, genutzt wird. Im englischen Sprachraum spricht man von Combined Cycle Power Plant (CCPP) oder Combined Cycle Gas Turbine (CCGT).

Eine spezielle Anwendung eines Kombikraftwerks wird im Rahmen von Meerwasserentsalzungsanlagen eingesetzt. Solche Anlagen verwenden im Allgemeinen ein als GuD ausgebildetes Kombikraftwerk, bei dem die Wärme aus der Stromerzeugung genutzt wird, Meerwasser zu entsalzen, beispielsweise zur Trinkwassergewinnung oder zur Gewinnung von Betriebs- oder Kühlwasser. Die vorliegende Erfindung sowie die ihr zugrundeliegende Problematik wird nachfolgend anhand solcher Kombikraftwerke zur Meerwasserentsalzung erläutert, ohne die Erfindung jedoch auf diese Anwendung einzuschränken.

Je nach Bedarf können Kombikraftwerke zum Zwecke der Meerwasserentsalzung so betrieben werden, dass entweder die Erzeugung von elektrischer Energie oder die Erzeugung von entsalztem Wasser der prioritäre Zweck ist, wobei die Priorität dabei zum Beispiel mit dem Betrieb der Zusatzfeuerung, der Dampfextraktion und/oder der Menge des Dampfes an der Turbine beeinflusst werden kann.

Die WO 2012/072352 A1 beschreibt ein Verfahren zum Betreiben und Regeln einer Gasturbine. Die EP 3 022 611 B1 beschreibt ferner ein Verfahren zur rechnergestützten Steuerung und Regelung einer Energieerzeugungsanlage.

Die Aufgabe der vorliegenden Erfindung besteht darin, den Betrieb eines Kombikraftwerks zu verbessern, insbesondere einen flexibleren Betrieb eines Kombikraftwerks zu ermöglichen. Dabei kann unter Ausnutzung von bestehender Produktionsflexibilität ein effizienterer Betrieb ermöglicht werden.

Erfindungsgemäß wird zumindest eine dieser Aufgaben durch ein Verfahren mit den Merkmalen des Patentanspruchs 1 und/oder durch eine Einrichtung mit den Merkmalen des Patentanspruchs 14 und/oder durch ein Kombikraftwerk mit den Merkmalen des Patentanspruchs 15 gelöst.

### Demgemäß sind vorgesehen:

- Ein Verfahren zur rechnergestützten Steuerung und/oder Regelung des Betriebs eines Energieerzeugungssystems, insbesondere eines Kombikraftwerks zur Energieerzeugung und Meerwasserentsalzung, mit den Schritten: Erstellen eines Simulationsmodells des Energieerzeugungssystems; Bereitstellen eines Effizienzberechnungsmoduls, welches dazu ausgebildet ist, anhand des erstellten Simulationsmodells und unter Verwendung von vorgegebenen Betriebsparametern die zu erwartende thermische und elektrische Effizienz des Energieerzeugungssystems zu berechnen; Anwenden eines Lern- und/oder Optimierungsverfahrens auf das bereitgestellte Effizienzberechnungsmodul unter Verwendung von vorher gewonnenen bekannten Betriebsdaten des Energieerzeugungssystems und/oder anhand von durch das Simulationsmodell gewonnenen Simulationsdaten derart, dass der Betrieb des Energieerzeugungssystems hinsichtlich zumindest eines thermischen und/oder elektrischen Betriebsparameters entsprechend einer Zielvorgabe optimiert wird; Erstellen einer Steuerungsstrategie für das Energieerzeugungssystem auf der Basis des trainierten Effizienzberechnungsmoduls; und Betreiben des Energieerzeugungssystems unter Verwendung der erstellen Steuerungsstrategie.
- Eine Einrichtung zur rechnergestützten Steuerung und/oder Regelung des Betriebs eines Energieerzeugungssystems, insbesondere des Betriebs eines Kombikraftwerks zur Meerwasserentsalzung zur gleichzeitigen Erzeugung von Elektrizität und zum Betreiben einer Entsalzungsanlage mit Dampf, wobei die Einrichtung aufweist: eine Simulationseinrichtung, die dazu ausgebildet ist, ein Simulationsmodell des Energieerzeugungssystems zu erstellen; ein Effizienzberechnungsmodul, welches dazu ausgebildet ist, anhand des erstellten Simulationsmodells und unter Verwendung von vorgegebenen Betriebsparametern des Energieerzeugungssystems die zu erwartende thermische und elektrische Effizienz des Energieerzeugungssystems zu berechnen; eine KI-Einrichtung, welche dazu ausgebildet ist, ein Lern- und/oder Optimierungsverfahren auf das Effizienzberechnungsmodul unter Verwendung von bekannten Betriebsdaten und/oder anhand von Simulationsdaten derart anzuwenden, dass der Betrieb des Energieerzeugungssystems hinsichtlich zumindest eines thermischen und/oder elektrischen Betriebsparameters optimiert wird; eine Steuereinrichtung, welche dazu ausgebildet ist, eine Steuerungsstrategie für das Energieerzeugungssystem auf der Basis des trainierten Effizienzberechnungsmoduls zu erstellen und das Energieerzeugungssystem unter Verwendung der erstellen Steuerungsstrategie zu betreiben.
- Ein Kombikraftwerk, mit einer Einrichtung zur Energieerzeugung, und mit einer Einrichtung zur rechnergestützten Steuerung und/oder Regelung des Betriebs des Kombikraftwerks.

Die der vorliegenden Erfindung zugrundeliegende Idee besteht darin, den Betrieb eines Energieerzeugungssystems, wie etwa eines Kombikraftwerks zur gleichzeitigen Energieerzeugung und Meerwasserentsalzung, dahingehend zu erweitern, dass bedarfsgemäß entweder die Erzeugung von elektrischer Energie, die Erzeugung von entsalztem Wasser oder ein vorgegebener Mischbetrieb davon im Vordergrund steht. Dabei wird zunächst die Effizienz des Energieerzeugungssystems auf der Basis eines Simulationsmodels und von aktuellen, prognostizierten oder simulierten Betriebsparametern berechnet. Erfindungsgemäß wird diese Betriebseffizienz anhand eines Lern- und/oder Optimierungsverfahrens ("reinforcement learning control strategy") und unter Verwendung von bekannten Betriebsdaten und Simulationsdaten, die als Trainingsdaten herangezogen werden, optimiert. Auf diese Weise kann das Energieerzeugungssystem, anders als bei bekannten, eher starr betriebenen Energieerzeugungssystemen, flexibel anhand von sich verändernden Betriebsmodi und/oder Gegebenheiten betrieben werden. Durch das erfindungsgemäße Lern- und Optimierungsverfahren kann dabei eine Steuerungsstrategie bereitgestellt werden, durch welche das Kombikraftwerk hinsichtlich einer Zielvorgabe optimal betrieben werden kann, auch vor dem Hintergrund sich ändernder Vorgaben oder eines sich ändernden Bedarfs an entsalztem Wasser und/oder elektrischer Energie.

Das erfindungsgemäße Lern- und Optimierungsverfahren basiert auf einer oder mehrerer Schätzfunktionen, welche auf Modellen basieren, etwa thermodynamischen oder elektrischen Simulationsmodellen, und deren Grundformen bekannt sein können oder individuell vorgegeben oder abgeschätzt bzw. angenähert werden können. Zum Trainieren der Schätzfunktion(en) kann das maschinelle Lernen der Steuereinrichtung auf ermittelte, gemessene oder geschätzte Betriebsdaten oder auf Simulationsdaten, etwa aus Näherungsmodellen, des Kombikraftwerks und dessen Komponenten gestützt werden, wobei diese Daten die aktuelle und/oder vergangene und/oder zukünftige Betriebsweise des Kombikraftwerks und dessen Komponenten widerspiegeln können.

Das erfindungsgemäße Lern- und Optimierungsverfahren kann weiterhin auf den, unter der berücksichtigten Betriebsweise, erzielten Abgabeprodukten und der zugehörigen Größen des Kombikraftwerks beruhen. Dabei kann der erzeugte Dampffluss, welcher für eine weitere industrielle Nutzung und/oder Entsalzung nutzbar sein kann, sowie die erzeugte elektrische und thermische Leistung, und eine Effizienz der Kraftwerkskomponente(n) in dieser Betriebsweise und unter den jeweiligen Eingabegrößen (Umweltparameter für den Kraftwerkbetrieb), ein jeweils relevanter Parameter sein.

Das erfindungsgemäße Lern- und Optimierungsverfahren kann weiterhin ein variables Lernverfahren zum Erzeugen einer Steuerungsstrategie beinhalten. Diese Steuerungsstrategie kann die aus dem maschinellen Lernen trainierte Schätzfunktion(en) als Eingabegröße(n) nutzen, um einen Bedarf an elektrischer Leistung und Dampfmenge sowie Effizienz und Leistung durch Steuerung des Kraftwerkbetriebs zu erzeugen und zu beeinflussen, wobei Kontroll- und/oder Eingabeparameter der Schätzfunktion(en) in einer möglichst effizienten Art eingestellt und gesteuert werden können. Diese möglichst effiziente Art kann einer Leistungserzeugung und/oder einer Verringerung des Treibstoffverbrauchs, etwa Gas, entsprechen, wobei vorgegebene Anforderungen an Leistung, Stromerzeugung oder weiteres, dennoch erzielt werden können.

Die Steuerungsstrategie kann mittels des erfindungsgemäßen Lern- und Optimierungsverfahrens und des Simulationsmodells erzeugt werden, um eine Optimierung des Kraftwerkbetriebs zu erzielen. Durch die Optimierung mittels der Steuerungsstrategie können Betriebsmodi des Kraftwerkbetriebs bestimmt werden, welche eine Vorgabe für den Bedarf an elektrischer Leistung erfüllen und einen Dampffluss oder eine Dampfmenge innerhalb eines geforderten oder nötigen Wertebereichs liefern können, wobei dieser Wertebereich einen aktuell notwendigen Dampfbedarf decken kann. Eine derartige Steuerungsstrategie kann vorteilhafterweise die am meisten energieeffizientesten Kontrollleinstellungen bieten, um vorgegebene oder angeforderte Strom- und/oder Dampfmengen zu erzielen, wobei die Schätzfunktion(en) dazu die entsprechenden Effizienzwerte o der Effizienzparameter darstellen können. Diese Effizienzparameter oder Effizienzwerte können dann von der Optimierungsfunktion der Steuerungsstrategie dazu genutzt werden, um lokale Betriebsmodi zu bestimmen (oder zu finden), die einer möglichst effizienten Betriebsweise des Kraftwerkbetriebs entsprechen können, wobei unterschiedliche Dampferzeugungsoder Dampftransportbedingungen berücksichtigt werden können.

Aus der jeweiligen Betriebsweise kann ein Überschuss oder ein Mangel an einer entsalzten Wassermenge, gegenüber einem Vergleichswert des Betriebs, erzielt werden, etwa gegenüber einem Durchschnittsbetrieb. Abhängig von dem vorliegenden Überschuss oder Mangel an entsalztem Wasser in den Auffangtanks der Entsalzungsanlage kann ein Ziel der Steuerungsstrategie angepasst werden, um die Steuerungsstrategie über das Lernund Optimierungsverfahren zu effizienten Erzeugungsparametern für Strom, Wärme oder Wasser (Dampf) zu leiten. So können Eingabeparameter sowie Kraftwerksbetriebsparametern an dieses Ziel angepasst werden, um etwa mehr oder weniger Dampf unter geringem Druck zu erzeugen und die Entsalzung von Wasser entsprechend zu erhöhen oder zu verringern, und vorteilhaft dabei die Vorgabe in der Stromerzeugung dennoch zu erreichen. So kann beispielsweise eine Optimierung erfolgen, auch wenn der Kraftwerkbetrieb im Moment nicht in einem der möglichen und bekannten optimierten Betriebsmodi erfolgt. Wenn ein momentaner Dampfbedarf einen solchen lokalen optimalen Betriebsmodus nicht erfüllt, kann die Steuerungsstrategie dies erkennen und berücksichtigen und dann für eine bestimmte Zeit die Richtwerte oder Zielvorgaben des elektrischen Bedarfs und/oder Dampfbedarfs derart variieren oder deren Vorgabewert modifizieren, dass dieser einem aktuellen oder zu erzielenden elektrischen Arbeitspunkt/Arbeitsbereich (Sollwert) entspricht und/oder diesen erfüllt, kombiniert mit einem verringerten Arbeitspunkt/Arbeitsbereich (Sollwert) für die Dampferzeugung, wobei der elektrischen Arbeitspunkt/Arbeitsbereich (Sollwert) und/oder Arbeitspunkt/Arbeitsbereich (Sollwert) für die Dampferzeugung eine höhere Effizienz aufweisen oder erzeugen kann (hinsichtlich des Treibstoffverbrauchs). Nach einer bestimmten Zeit, kann dann der Bedarf an Dampf steigen und/oder der Arbeitspunkt/Arbeitsbereich (Sollwert) für die Dampferzeugung über einen ursprünglichen Arbeitspunkt/Arbeitsbereich (Sollwert) für die Dampferzeugung gehoben werden, die Produktion also über einen ursprünglichen Grad gesteigert werden. Dieser neue Arbeitspunkt/Arbeitsbereich (Sollwert) für die Dampferzeugung kann wiederum eine höhere Effizienz des Betriebs aufweisen als der ursprüngliche Kraftwerkbetrieb. Auf diese Weise kann der elektrische Bedarf stets erfüllt sein, während der Dampfbedarf über eine bestimmte Zeitspanne im Durchschnitt erfüllt sein kann.

Wie in weiterer Folge noch erläutert wird, kann ein Wechsel von einem Betriebsszenario mit einer einfachen Anforderung elektrischer Leistung und einer Dampferzeugung unter geringem Druck zu einem weiteren Betriebsszenario erfolgen. Das weitere Betriebsszenario kann dabei eine geringfügig höhere oder geringere Produktion von Dampf unter geringem Druck aufweisen, jedoch mit einer höheren Effizienz des Kraftwerkbetriebs. Auf diese Weise kann ein Mangel oder ein Überschuss an zu erzeugendem Wasser über eine bestimmte Zeit angehäuft werden, wobei unter dieser bestimmten Zeit stets ein Betrieb mit erhöhter Effizienz erfolgen kann, als ursprünglich vorgegeben.

Durch eine Speicherkapazität (buffering capacity) der Entsalzungstanks der Entsalzungsanlage, kann diese Variation der Dampfproduktion und eine damit verbundene Wasserproduktion durchgeführt werden, wenn vorgegebene Wertebereiche oder Grenzbereiche für bestehende oder erzeugte Wassermengen trotzdem erreicht werden oder beibehalten werden können.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer bevorzugten Ausführungsform wird im Verfahrensschritt des Erstellens das Simulationsmodell auf der Basis von bekannten, zeitlich aufeinander folgenden Zuständen und Eigenschaften des Energieerzeugungssystems, insbesondere der thermischen und/oder elektrischen Betriebsweise und der Effizienz, erstellt.

Besonders bevorzugt werden manche oder alle Verfahrensschritte des Bereitstellens, Anwendens, Erstellens und/oder Betreibens iterativ durchgeführt, insbesondere nach vorgegebenen Zeitabschnitten und/oder vorgegebenen Betriebsereignissen. Insbesondere kann auf diese Weise das Simulationsmodell und/oder das Effizienzberechnungsmodul kontinuierlich und/oder iterativ mit einem aktuellen Betrieb des Energieerzeugungssystems abgeglichen und/oder trainiert werden. Im Fall eines Kombikraftwerks können dabei ein bestimmtes Maß der Dampferzeugung und/oder eine erzeugte elektrische und thermische Leistung berücksichtigt werden und mit einer Vorgabe verglichen werden. Auf diese Weise kann vorteilhaft eine Effizienz des Kraftwerkbetriebs und dessen jeweilige Betriebsmodi gesteigert und an Vorgabewerte angepasst werden. Dies kann einer ständig oder regelmäßig wiederholten Anwendung der GuD-Optimierung und/oder der Lastpunkt-Verschiebung entsprechen, etwa zu effizienteren Betriebsbedingungen hin unter Einhaltung der elektrischen Mindestleistung.

Die Zielvorgabe kann beispielsweise im Fall eines Kombikraftwerks zum Beispiel eine vorbestimmte elektrische Leistung und/oder eine vorbestimmte Dampfmenge beinhaltet. Denkbar wären jedoch andere Betriebsparameter, wie etwa der Dampfdruck, die Temperatur, etc..

Gemäß einer bevorzugten Ausführungsform umfasst der Schritt des Anwendens ein Trainingsverfahren zum maschinellen Lernen unter Verwendung einer Künstlichen-Intelligenz (KI) Einrichtung, welche insbesondere ein trainierbares künstliches neuronales Netzwerk und/oder eine Deep-Learning-Einheit umfasst. Das Lernen (oder Training) basiert zum Beispiel auf Trainingsdaten von bekannten Aktionssequenzen mit bekannten aus den Aktionssequenzen resultierenden Zuständen des Betriebs des technischen Systems).

Gemäß einer weiteren oder zusätzlichen bevorzugten Ausführungsform umfasst der Schritt des Anwendens ein Optimierungsverfahren unter Verwendung eines oder mehrerer Entscheidungsbäume und/oder basierend auf einer Teilchen-Schwarm-Optimierung, um eine Betriebsstrategie zu bestimmen. Somit lassen sich für eine vorgegebene Betriebsstrategie durch Optimierung eine vorgegebene elektrische Leistung und ein vorgegebener Dampffluss erzeugen, wobei die Effizienz durch die Optimierung vorteilhaft gesteigert werden kann.

Gemäß einer bevorzugten Ausführungsform weist das Simulationsmodell ein physikalisches Modell, ein analytisches Modell und/oder ein datengetriebenes Modell für eine oder mehrere Komponenten des Energieerzeugungssystems auf.

Gemäß einer bevorzugten Ausführungsform ist das Energieerzeugungssystem ein Kombikraftwerk zur Meerwasserentsalzung. In diesem Fall berücksichtig das Simulationsmodell zum Beispiel einen Kraftwerksbetriebsparameter und/oder einen Umweltparameter. Mit der Wahl des entsprechenden Kraftwerksbetriebsparameters und/oder Umweltparameters kann die Abschätzung der Effizienz des Kraftwerkbetriebs gesteigert werden und detaillierter festgelegt werden, was eine Steigerung der Genauigkeit der Effizienzberechnung bewirken kann.

Ein Kraftwerksbetriebsparameter kann dabei zumindest eine der folgenden Informationen des Kombikraftwerks beinhaltet:
- Betriebsweise eines Gaskompressors;
- Betriebsweise eines Gasvorheizers;
- Betriebsweise einer Gasturbine;
- Betriebsweise eines Wärmetausch-Dampfgenerators;
- Betriebsweise einer Dampfturbine;
- Betriebsweise von Pumpanlagen;
- Betriebsweise eines Entsalzungstanks.

Ein Umweltparameter kann dabei zumindest eine der folgenden Informationen des Kombikraftwerks beinhaltet:
- eine Temperatur einer Umgebungsluft;
- eine Feuchtigkeit der Umgebungsluft;
- einen Druck der Umgebungsluft;
- eine Abgastemperatur;
- eine Dampftemperatur;
- eine HRSG-Zusatzfeuerung;
- einen Dampffluss einer Gasturbine.

Durch die genannten Parameter und Kraftwerkskomponenten kann ein Beurteilungsmodell, etwa für das Effizienzberechnungsmodul und/oder für die Steuerungsstrategie erstellt und genutzt werden. Damit verbunden oder zusätzlich aus weiteren Ansätzen (etwa aus bekannten Modellen für die Betriebsweise der Kraftwerkskomponenten) können Modelle zur elektrischen und/oder thermischen Energie-Effizienz erstellt und genutzt werden, welche die Betriebsmodi von Teilen oder des gesamten Betriebszyklus des Kombikraftwerks berücksichtigen können. Bei diesen Betriebsmodi können alle relevanten Kraftwerkskomponenten und/oder Kraftwerksbetriebsparameter und/oder Umweltparameter berücksichtigt werden.

Die Simulationsmodelle sowie die Effizienzberechnungsmodule zur elektrischen und/oder thermischen Energie-Effizienz können auf deren momentane Genauigkeit überprüft werden, was ein Schritt des maschinellen oder bestärkenden Lernens sein kann. Dabei kann abgeschätzt werden, um wieviel die vom Kraftwerkbetrieb erzeugten Größen (Strommenge, elektrische Leistung, Dampffluss, Dampfmenge mit hohem und niedrigem Druck, Dampftemperatur und weitere) von einer Vorgabe oder von einem Erwartungswert abweichen. Daraus kann ein Abweichungsgrad bestimmt werden, beispielsweise für die Betriebsstrategie und für deren charakteristische Parameter. Beispielsweise kann bei der Bestimmung des Abweichungsgrades eine Variation der Effizienz in der Nutzung des Treibstoffverbrauchs für das Kraftwerk, wie etwa Erdgas, für den aktuellen Betrieb und bei einem Wechsel zu einer anderen Betriebsweise berücksichtigt werden. Dadurch kann eine optimierte Verteilung der Leistung zwischen unterschiedlichen Einheiten oder Bereichen des Kombikraftwerks erfolgen.

Zusätzlich oder alternativ zu den bisher genannten Umweltparametern können noch weitere Kontrollparameter des Kombikraftwerks und dessen Komponenten berücksichtigt werden, beispielsweise Abgastemperatur einer Gasturbine, so genanntes "Wet Compression" als ein Leistungssteigerungsverfahren, Dampftemperatur, Parameter der Zusatzfeuerung, Attemporation oder Abspritzen des Hochdruckdampfes, Extraktionsfluss an der Dampfturbine, sowie die Nutzung der Hochdruck zu Zwischendruck (HP/IP) und Hochdruck zu Niederdruck (HP/LP) Umlenkstationen.

Gemäß einer bevorzugten Ausführungsform wird die Steuerungsstrategie durch das vorangegangene Lern- und/oder Optimierungsverfahren derart modifiziert, dass zumindest ein optimierter Betriebsmodus bestimmt wird, bei welchem ein Mindestwert für die elektrische Leistung erzeugt wird und der erzeugte Dampffluss innerhalb eines Toleranzintervalls gehalten wird, wobei das Toleranzintervall ein vorgegebenes Bedarfskriterium erfüllt. Durch das Toleranzintervall kann dann die Wahrscheinlichkeit erhöht sein, dass ein effizienterer Betrieb unter Einhaltung der Bedarfskriterien gefunden werden kann und/oder ein Vorgabewert für zumindest eine erzeugte Größe erfüllt werden kann.

Gemäß einer bevorzugten Ausführungsform erfolgt während des Betriebs des Kombikraftwerks eine Überprüfung der Betriebsparameter dahingehend, ob ein im Kombikraftwerk momentan erzeugter Dampffluss den durch die Betriebsstrategie vorgegebenen Dampffluss übersteigt. Im Fall eines erkannten Übersteigens kann vorgesehene werden, dass unter Beibehaltung der vorgegebenen elektrischen Leistung eine zusätzliche Entsalzung erfolgt, um einen vorhergehenden oder zu erwartenden Betrieb geringerer Effizienz in der Entsalzung zumindest teilweise zu kompensieren. Es kann zeitweise ein Betrieb mit höherer Dampfproduktion und dann später zum Ausgleich ein Betrieb mit geringerer Dampfproduktion erfolgen (oder umgekehrt), wenn in beiden Betriebe (bzw. zumindest in Summe) eine höhere Effizienz erzielt werden kann, als ob über eine bestimmte Zeitspanne genau nach einer Vorgabe gefahren (betrieben) wird.

Gemäß einer bevorzugten Ausführungsform erfolgt eine Skalierung der Betriebsstrategie auf zukünftige Betriebsmodi des Energieerzeugungssystems. Durch Skalierungen kann in vorteilhafter Weise auf zu erwartende Änderungen in den Betriebsoder Umweltbedingungen sowie betreffend den zukünftigen Bedarf reagiert werden. Dazu kann die Variation des elektrischen Bedarfs (zum Beispiel Strom- oder Energiebedarf), des Dampfbedarfs, des Bedarfs an entsalztem Wasser erkannt werden und durch Skalierung der Richtwerte oder Zielvorgaben für eine elektrische Leistung und/oder Dampferzeugung der Kraftwerkbetrieb angepasst werden, um eine erwünschte oder notwendige elektrische Leistung oder Dampferzeugung unter vorgegebener Effizienz zu erreichen. Es kann jedoch auch, oder stattdessen, ein erwartetes Bedarfs-Profil (für eine elektrische Leistung und Dampferzeugung) bei der Dampferzeugung in Summe (bei Dampf; bei elektrischer Leistung dagegen zu jeder Zeit) möglichst effizient erfüllt werden.

Der erfindungsgemäße Lern- und Optimierungsansatz kann dabei einem Wechsel von einem Betriebsszenario mit einer einfachen Anforderung elektrischer Leistung und einer Dampferzeugung unter geringem Druck zu einem weiteren Betriebsszenario entsprechen. Das weitere Betriebsszenario kann dabei eine geringfügig höhere oder geringere Produktion von Dampf unter geringem Druck aufweisen, jedoch mit einer höheren Effizienz des Kraftwerkbetriebs. Auf diese Weise kann ein Mangel oder ein Überschuss an zu erzeugendem Wasser über eine bestimmte Zeit angehäuft werden, wobei unter dieser bestimmten Zeit stets ein Betrieb mit erhöhter Effizienz erfolgen kann, als ursprünglich vorgegeben.

Nach einer bestimmten Zeit oder wenn ein Grenzbereich erreicht wird, etwa wenn ein erlaubter Höchststand oder Tiefstand des Wassers in den Tanks erreicht wird, kann der Betrieb zu dem jeweils anderen und vorteilhafteren oder zu einem weiteren Betriebsszenario gewechselt werden, wobei das weitere Betriebsszenario wiederum auch eine höhere Effizienz aufweisen kann als der ursprüngliche Bedarf, wobei das weitere Betriebsszenario jedoch den Verbrauch des Mangels/Überschusses nicht zulässt. Auf diese Weise kann über eine gewisse Zeitspanne eine vorgegebene Wassermenge erzeugt werden und dabei über diese Zeitspanne hinweg stets die vorgegebene elektrische Leistung erzeugt werden, etwa exakt die vorgegebene elektrische Leistung, und stets eine höhere Effizienz erzielt werden als wenn einer ursprünglich vorgegebenen Betriebsweise gefolgt werden würde.

Gegenüber bekannten Ansätzen kann zumindest ein oder mehrere Simulationsmodelle und/oder zumindest ein oder mehrere Effizienzberechnungsmodule zur Erstellung einer geeigneten Betriebsstrategie herangezogen werden, welche den Kraftwerkbetrieb direkt steuert. So kann durch die Betriebsstrategie auch eine Verteilung des Betriebs auf verschiedene Blöcke oder Bereiche des Kraftwerks erfolgen. Dabei können Kontrollparameter für eine Optimierung des Betriebs des Kraftwerks oder von Teilkomponenten davon genutzt werden, um zum Beispiel eine Optimierung der verbesserten Erzeugung von Elektrizität und Dampf mit möglichst wenig Treibstoff zu ermöglichen. Dabei können auch zahlreiche Umweltparameter berücksichtigt werden, wodurch auch eine Degradierung (Alterung oder Abnutzungseffekte) von Kraftwerkskomponenten berücksichtigt werden kann. Beispielsweise kann für den Betrieb ein Wertebereich für eine Leistung des Kraftwerkbetriebs von +-10 MW und/oder für einen Dampffluss von +- 10 kg/s berücksichtigt werden oder zwischen diesen umgeschaltet werden, oder davon abweichende Werte in Frage kommen.

Die Simulationsmodelle und/oder Effizienzberechnungsmodule können individuell erstellt sein oder vorgegeben sein. Die Simulationsmodelle und/oder Effizienzberechnungsmodule können online zugriffsbereit sein und trainiert werden. Der Kraftwerkbetrieb kann zudem so variiert werden, dass eine Flexibilität in der Wasser- und/oder Dampfproduktion gegeben sein kann und diese variiert werden kann, wobei eine Effizienz des Kraftwerkbetriebs variabel sein kann und zumindest die Produktion der elektrischen Leistung dennoch einen Vorgabewert erfüllen kann.

Die Simulationsmodelle und/oder Effizienzberechnungsmodule können genutzt werden, um die Effizienz eines oder mehrerer Blöcke eines Kombikraftwerks dazu zu nutzen, eine sensiblere Verteilung der elektrischen Leistung und Dampfleistung auf verschiedene bereitstehende Blöcke zu bestimmen, insbesondere im Fall von großen Kombikraftwerken mit einer Vielzahl von Kraftwerksblöcken. Auf diese Weise kann ein verbesserter Kraftwerkbetrieb erzielt werden, welcher sich effektiver gestalten kann als ein bisher üblicher Offline-Betrieb mit Simulationen des Kraftwerkbetriebs, welcher nach der Simulation durch ermittelte Kontrollkurven der Betriebsgrößen umgesetzt werden musste. Die erfindungsgemäß ermittelte Optimierung kann eine deutlich höhere Zahl von Betriebsparametern und diese interaktiv sowie Online mit dem Kraftwerksbetrieb berücksichtigen.

Gemäß einer bevorzugten Ausführungsform des Kombikraftwerks ist die Einrichtung zur Energieerzeugung dazu ausgebildet, eine elektrische Energie und eine thermische Energie für das Betreiben einer Entsalzungsanlage zu erzeugen, und/oder das Kombikraftwerk umfasst eine Einrichtung zur Dampferzeugung, welche dazu ausgebildet ist, gleichzeitig elektrische Energie und Dampf zum Betreiben einer Entsalzungsanlage zu erzeugen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren der Zeichnungen angegebenen Ausführungsbeispiele näher erläutert. Es zeigen dabei:
Fig. 1 eine schematische Darstellung eines als Kombikraftwerk ausgebildeten Energieerzeugungssystems gemäß einem Ausführungsbeispiel der vorliegenden Erfindung;
Fig. 2 ein Blockschaltbild zur Illustration der Funktionsweise des Energieerzeugungssystems aus Fig. 1; und
Fig. 3 ein Ablaufdiagramm für das erfindungsgemäße Verfahren zur rechnergestützten Steuerung und/oder Regelung des Betriebs eines Energieerzeugungssystems.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausführt ist - jeweils mit denselben Bezugszeichen versehen.

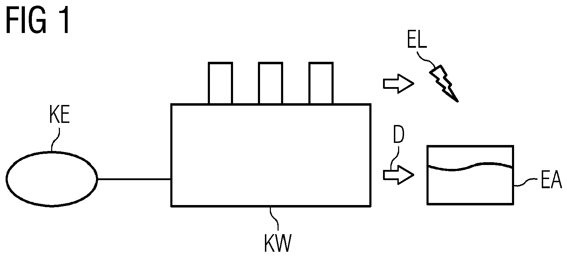

Die Fig. 1 zeigt eine schematische Darstellung eines als Kombikraftwerk ausgebildeten Energieerzeugungssystems gemäß einem Ausführungsbeispiel der vorliegenden Erfindung.

Das erfindungsgemäße Energieerzeugungssystem umfasst eine Steuereinrichtung KE, ein Kombikraftwerk KW sowie eine Entsalzungsanlage EA.

Die Steuereinrichtung KE kann dabei mit einem Kombikraftwerk KW über eine Steuerschnittstelle gekoppelt sein oder Bestandteil des Kombikraftwerks KW sein. Die Steuereinrichtung KE ist erfindungsgemäß dazu ausgebildet, ein Lern- und/oder Optimierungsverfahren durchzuführen, welcher die Steuerungsstrategie für das Kombikraftwerk KW betrifft, um dadurch eine vorgegebene elektrische Leistung und einen vorgegebenen Dampffluss zu erzeugen.

Die Steuereinrichtung KE zum Steuern des Betriebs des Kombikraftwerks KW zur Erzeugung von Elektrizität EL und zum Betreiben einer Entsalzungsanlage EA mit Dampf D ist dazu eingerichtet, zumindest eine Schätzfunktion zur thermischen und elektrischen Betriebsweise und Effizienz des Kombikraftwerks zu bestimmen. Die Schätzfunktion wird zum Beispiel über ein maschinelles Lernen (oder einem anderen Lern- oder Optimierungsverfahren) basierend auf Betriebs- oder Messdaten und/oder Simulationsdaten trainiert, um auf Basis dieser Schätzfunktion eine Steuerungsstrategie für den optimierten Betrieb des Kombikraftwerks mittels eines bestärkenden Lernens unter Anwendung der Schätzfunktion zu erstellen. Diese Steuerungsstrategie wird für den Betrieb des Kombikraftwerks angewendet, um eine von einem Betreiber des Kombikraftwerks vorgegebene oder vorbestimmte elektrische Leistung und/oder eine vorbestimmte Dampfmenge zum Betreiben der Entsalzungsanlage EA zu erzeugen.

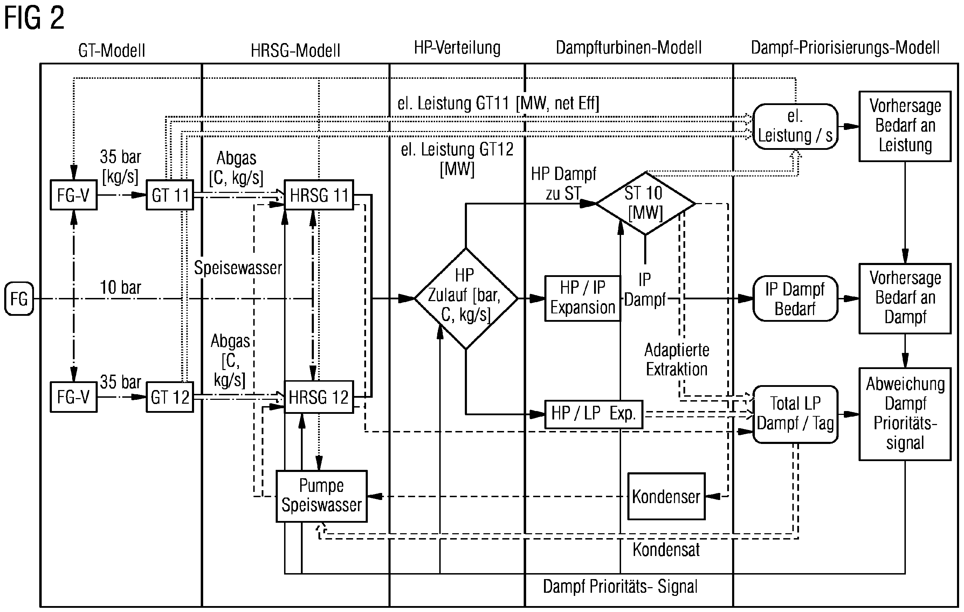

Fig. 2 zeigt ein Blockschaltbild zur Illustration der Funktionsweise des Energieerzeugungssystems aus Fig. 1.

Die Figur 2 zeigt ein Blockschaltbild zwischen einer Eingabe des Treibstoff-Gases FG, beispielsweise unter einem Druck von 10 bar, und einer Ausgabe der Produktionsprodukte, insbesondere einer elektrischen Leistung und Dampf unter Niederdruck LP, unter Hochdruck HP und unter Zwischendruck IP. Aus den erzeugten Größen für die elektrische Leistung kann bezogen auf die benötigte Menge des Treibstoff-Gases FG eine Effizienz des Kraftwerkbetriebs gemäß der Erfindung ermittelt werden und dieser optimiert werden, um bei erzielbaren Vorgaben höhere Mengen an Dampf in HP, IP oder LP zu erhalten.

Es kann eine erste Gasturbine GT11 und eine zweite Gasturbine GT12 jeweils mit dem Treibstoff-Gas FG versorgt werden, beispielsweise nachdem dieses durch einen Gas-Verdichter FG-V verdichtet wurde, etwa auf einen Druck von 35 bar. Der Betrieb der Gasturbinen kann mit einem bekannten oder eigens bereitgestellten Gasturbinenmodell (GT-Modell) beschrieben werden, wobei entsprechende Betriebsdaten und Betriebsparameter berücksichtigt werden können, etwa um Schätzfunktionen zu ermitteln. Das überschüssige Gas und/oder das Abgas der beiden Gasturbinen kann jeweils zu einem ersten Wärmetausch-Dampfgenerator HRSG11 und zu einem zweiten Wärmetausch-Dampfgenerator HRSG12 geleitet werden. Dieser Abschnitt kann mit einem Modell für die Wärmetausch-Dampfgeneratoren (HRSG-Modell) beschrieben werden.

Die Wärmetausch-Dampfgeneratoren können mit einem Speisewasser von einer zugehörigen Pumpe und/oder von einem Kondenser im Kraftwerk betrieben werden und Dampf unter Hochdruck HP erzeugen. Ein Dampfzulauf (HP-Zulauf) für den Dampf unter Hochdruck kann den Dampf an eine Dampfturbine ST leiten und an eine Expansion von Hochdruck HP zu Zwischendruck IP und/oder von Hochdruck HP zu Niederdruck LP leiten. Die Dampfturbine ST kann wiederum einen Beitrag zur elektrischen Leistung erzeugen, zusätzlich zu jenem von den Gasturbinen, oder Dampf unter Zwischendruck IP und/oder unter Niederdruck LP angeben. Des Weiteren kann ein Teil des von der Dampfturbine ST abgegebenen Dampfes an den Kondenser geleitet werden, welcher wiederum Speisewasser erzeugen kann. Aus der Ausgabe des Niederdrucks LP selbst kann auch direkt ein bestimmter Teil kondensieren, was dann wieder an die Wärmetausch-Dampfgeneratoren rückgeführt werden kann.

Die ausgegebenen Produkte können dann mit dem Bedarf an elektrischer Leistung und Dampf unter Zwischendruck, mit einer Vorhersage für den Bedarf an elektrischer Leistung und mit einer Vorhersage für den Bedarf an Dampf verglichen werden und eine Abweichung berechnet werden. Davon kann dann eine zu adaptierende Variation der Größen der Betriebsparameter erzeugt werden und ein Priorisierungssignal für die elektrische Leistung und/oder den Dampf ermittelt werden und an die Wärmetausch-Dampfgeneratoren und/oder Turbinen zur Modifizierung der Dampferzeugung/Stromerzeugung übermittelt werden. Dazu kann zum Erzeugen des Dampfes unter Niederdruck LP von der Dampfturbine ST eine Adaptierung der Extraktion des Restdampfs entsprechend den Abweichung- und Priorisierungswerten gesteuert werden. Für den Betrieb der Dampfturbine und zur Beurteilung der Produkte kann ein Dampfturbinen-Modell und ein Dampf-Priorisierungsmodell angewandt werden, in welchen entsprechende Systemparameter zur Erstellung entsprechender Schätzfunktionen für den Betrieb dieser Kraftwerksmodule berücksichtigt werden können.

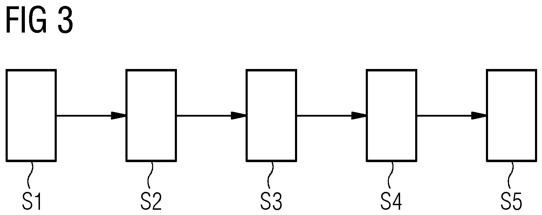

Fig. 3 zeigt ein Ablaufdiagramm für das erfindungsgemäße Verfahren zur rechnergestützten Steuerung und/oder Regelung des Betriebs eines Energieerzeugungssystems.

Bei dem erfindungsgemäßen Verfahren zur rechnergestützten Steuerung und/oder Regelung des Betriebs eines Energieerzeugungssystems wird in einem initialen Verfahrensschritt S1 zunächst ein Simulationsmodell des Energieerzeugungssystems, des Kombikraftwerks KW oder Teilen oder Komponenten davon erstellt. Dieses Simulationsmodell beinhaltet, je nach Komplexität, ein mehr oder weniger genaues Abbild des Energieerzeugungssystems, des Kombikraftwerks KW oder Teilen oder Komponenten davon und somit eine gewissermaßen eine Schätzfunktion zu deren thermischen und elektrischen Betriebsweise.

In einem nachfolgenden zweiten Verfahrensschritt S2 wird ein Effizienzberechnungsmodul bereitgestellt. Das Effizienzberechnungsmodul ist dazu ausgebildet, anhand des erstellten Simulationsmodells und unter Verwendung von vorgegebenen Betriebsparametern die zu erwartende thermische und elektrische Effizienz des Energieerzeugungssystems zu berechnen.

In einem darauf sich anschließenden Verfahrensschritt S3 erfolgt ein Trainieren S2 des Effizienzberechnungsmoduls. Dieser Trainingsschritt S3 erfolgt durch Anwenden eines Lernund/oder Optimierungsverfahrens auf das bereitgestellte Effizienzberechnungsmodul unter Verwendung von bekannten Betriebsdaten des Energieerzeugungssystems und/oder anhand von durch das Simulationsmodell gewonnenen Simulationsdaten. Auf diese Weise kann der Betrieb des Energieerzeugungssystems hinsichtlich zumindest eines thermischen und/oder elektrischen Betriebsparameters optimiert wird. Die Optimierung erfolgt vorzugsweise anhand einer Zielvorgabe, beispielsweise des Betreibers des Energieerzeugungssystems, des Kombikraftwerks und/oder der Anlage zur Meerwasserentsalzung. Für das Lern- und/oder Optimierungsverfahren kommt vorzugsweise ein maschinelles Lernen in Frage, beispielsweise unter Verwendung eines trainierten künstlichen neuronalen Netzwerks (ANN = artificial neuronal network). Denkbar wären jedoch jegliche anderen Methoden der künstlichen Intelligenz (KI), wie etwa des Deep Learning, bestärkendes Lernen (reinforcement learning). Denkbar wären hier aber auch andere Lern- und/oder Optimierungsverfahrens, wie etwa die Verwendung von geeigneten Entscheidungsbäumen.

Auf der Basis des trainierten oder optimierten Effizienzberechnungsmoduls wird in einem weiteren Verfahrensschritt S4 eine optimierte Steuerungs- oder Betriebsstrategie zum Betreiben des Energieerzeugungssystems ermittelt.

Schließlich wird das Energieerzeugungssystem bzw. das Kombikraftwerk im Schritt S5 unter Verwendung der ermittelten optimierten Steuerungs- oder Betriebsstrategie betrieben. Auf diese Weise kann eine vorbestimmte elektrische Leistung und/oder eine vorbestimmte Dampfmenge zum Betreiben der Entsalzungsanlage bedarfsweise und individuell angepasst erzeugt werden.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

## Patentansprüche

1. Verfahren zur rechnergestützten Steuerung und/oder Regelung des Betriebs eines Energieerzeugungssystems, insbesondere eines Kombikraftwerks zur Energieerzeugung und Meerwasserentsalzung, mit den Schritten:
Erstellen (S1) eines Simulationsmodells des Energieerzeugungssystems;
Bereitstellen (S2) eines Effizienzberechnungsmoduls, welches dazu ausgebildet ist, anhand des erstellten Simulationsmodells und unter Verwendung von vorgegebenen Betriebsparametern die zu erwartende thermische und elektrische Effizienz des Energieerzeugungssystems zu berechnen;
Anwenden (S3) eines Lern- und/oder Optimierungsverfahrens auf das bereitgestellte Effizienzberechnungsmodul unter Verwendung von bekannten Betriebsdaten des Energieerzeugungssystems und/oder anhand von durch das Simulationsmodell gewonnenen Simulationsdaten derart, dass der Betrieb des Energieerzeugungssystems hinsichtlich zumindest eines thermischen und/oder elektrischen Betriebsparameters entsprechend einer Zielvorgabe optimiert wird;
Erstellen (S4) einer Steuerungsstrategie für das Energieerzeugungssystem auf der Basis des trainierten Effizienzberechnungsmoduls; und
Betreiben (S5) des Energieerzeugungssystems unter Verwendung der erstellen Steuerungsstrategie.

2. Verfahren nach Anspruch 1,
**dadurch gekennzeichnet,**
**dass** im Verfahrensschritt des Erstellens (S1) das Simulationsmodell auf der Basis von bekannten, zeitlich aufeinander folgenden Zuständen und Eigenschaften des Energieerzeugungssystems erstellt wird.

3. Verfahren nach einem der vorherigen Ansprüche,
**dadurch gekennzeichnet,**
**dass** die Verfahrensschritte des Bereitstellens (S2), des Anwendens (S3), des Erstellens (S4) und/oder des Betreibens (S5) iterativ durchgeführt werden, insbesondere nach vorgegebenen Zeitabschnitten und/oder vorgegebenen Betriebsereignissen.

4. Verfahren nach einem der vorherigen Ansprüche,
**dadurch gekennzeichnet,**
**dass** die Zielvorgabe eine vorbestimmte elektrische Leistung und/oder eine vorbestimmte Dampfmenge beinhaltet.

5. Verfahren nach einem der vorherigen Ansprüche,
**dadurch gekennzeichnet,**
**dass** der Schritt des Anwendens (S3) ein Trainingsverfahren zum maschinellen Lernen unter Verwendung einer Künstlichen-Intelligenz (KI) Einrichtung, welche insbesondere ein trainierbares künstliches neuronales Netzwerk und/oder eine Deep-Learning-Einheit umfasst, beinhaltet.

6. Verfahren nach einem der vorherigen Ansprüche,
**dadurch gekennzeichnet,**
**dass** der Schritt des Anwendens (S3) ein Optimierungsverfahren unter Verwendung eines oder mehrerer Entscheidungsbäume und/oder basierend auf einer Teilchen-Schwarm-Optimierung erfolgt.

7. Verfahren nach einem der vorherigen Ansprüche,
**dadurch gekennzeichnet,**
**dass** das Simulationsmodell ein physikalisches Modell und/oder ein analytisches Modell und/oder ein datengetriebenes Modell für eine oder mehrere Komponenten des Energieerzeugungssystems aufweist.

8. Verfahren nach einem der vorherigen Ansprüche,
**dadurch gekennzeichnet,**
**dass** das Energieerzeugungssystem ein Kombikraftwerk zur Meerwasserentsalzung ist, wobei das Simulationsmodell einen Kraftwerksbetriebsparameter und/oder Umweltparameter berücksichtigt.

9. Verfahren nach Anspruch 8,
**dadurch gekennzeichnet,**
**dass** der Kraftwerksbetriebsparameter zumindest eine der folgenden Informationen des Kombikraftwerks beinhaltet:
- Betriebsweise eines Gaskompressors;
- Betriebsweise eines Gasvorheizers;
- Betriebsweise einer Gasturbine (GT);
- Betriebsweise eines Wärmetausch-Dampfgenerators (HRSG);
- Betriebsweise einer Dampfturbine (ST);
- Betriebsweise von Pumpanlagen;
- Betriebsweise eines Entsalzungstanks.

10. Verfahren nach Anspruch 8 oder 9,
**dadurch gekennzeichnet,**
**dass** der Umweltparameter zumindest eine der folgenden Informationen des Kombikraftwerks beinhaltet:
- eine Temperatur einer Umgebungsluft;
- eine Feuchtigkeit der Umgebungsluft;
- einen Druck der Umgebungsluft;
- eine Abgastemperatur;
- eine Dampftemperatur;
- eine HRSG-Zusatzfeuerung;
- einen Dampffluss einer Gasturbine (GT).

11. Verfahren nach einem der Ansprüche 8 bis 10,
**dadurch gekennzeichnet,**
**dass** die Steuerungsstrategie durch das vorangegangene Lernund/oder Optimierungsverfahren derart modifiziert wird, dass zumindest ein optimierter Betriebsmodus bestimmt wird, bei welchem ein Mindestwert für die elektrische Leistung erzeugt wird und der erzeugte Dampffluss innerhalb eines Toleranzintervalls gehalten wird.

12. Verfahren nach einem der Ansprüche 8 bis 11,
**dadurch gekennzeichnet,**
**dass** während des Betriebs des Kombikraftwerks eine Überprüfung der Betriebsparameter dahingehend erfolgt, ob ein im Kombikraftwerk momentan erzeugter Dampffluss den durch die Betriebsstrategie vorgegebenen Dampffluss übersteigt und im Fall eines erkannten Übersteigens unter Beibehaltung der vorgegebenen elektrischen Leistung eine zusätzliche Entsalzung erfolgt.

13. Verfahren nach einem der vorherigen Ansprüche,
**dadurch gekennzeichnet,**
**dass** eine Skalierung der Betriebsstrategie auf zukünftige Betriebsmodi des Energieerzeugungssystems erfolgt.

14. Einrichtung (KE) zur rechnergestützten Steuerung und/oder Regelung des Betriebs eines Energieerzeugungssystems, insbesondere des Betriebs eines Kombikraftwerks (KW) zur gleichzeitigen Erzeugung von Elektrizität (EL) und zum Versorgen einer Entsalzungsanlage (EA) mit Dampf (D), vorzugsweise unter Verwendung eines Verfahrens gemäß einem der Ansprüche 1 bis 13, wobei die Einrichtung (KE) aufweist:
eine Simulationseinrichtung, die dazu ausgebildet ist, ein Simulationsmodell des Energieerzeugungssystems zu erstellen;
ein Effizienzberechnungsmodul, welches dazu ausgebildet ist, anhand des erstellten Simulationsmodells und unter Verwendung von vorgegebenen Betriebsparametern des Energieerzeugungssystems die zu erwartende thermische und elektrische Effizienz des Energieerzeugungssystems zu berechnen;
eine KI-Einrichtung, welche dazu ausgebildet ist, ein Lernund/oder Optimierungsverfahren auf das Effizienzberechnungsmodul unter Verwendung von bekannten Betriebsdaten und/oder anhand von Simulationsdaten derart anzuwenden, dass der Betrieb des Energieerzeugungssystems hinsichtlich zumindest eines thermischen und/oder elektrischen Betriebsparameters optimiert wird;
eine Steuereinrichtung, welche dazu ausgebildet ist, eine Steuerungsstrategie für das Energieerzeugungssystem auf der Basis des trainierten Effizienzberechnungsmoduls zu erstellen und das Energieerzeugungssystem unter Verwendung der erstellen Steuerungsstrategie zu betreiben.

15. Kombikraftwerk,
mit einer Einrichtung zur Energieerzeugung, und
mit einer Einrichtung (KE) zur rechnergestützten Steuerung und/oder Regelung des Betriebs des Kombikraftwerks, insbesondere unter Verwendung eines Verfahrens gemäß einem der Ansprüche 1 bis 13.

16. Kombikraftwerk nach Anspruch 15,
**dadurch gekennzeichnet,**
**dass** die Einrichtung zur Energieerzeugung dazu ausgebildet ist, eine elektrische Energie und eine thermische Energie für das Betreiben einer Entsalzungsanlage zu erzeugen, und/oder dass das Kombikraftwerk eine Einrichtung zur Dampferzeugung umfasst, welche dazu ausgebildet sind, gleichzeitig elektrische Energie und Dampf zum Betreiben einer Entsalzungsanlage zu erzeugen.
